# EUROPÄISCHE PATENTANMELDUNG

(11) **EP 4 148 936 A1**
(43) Veröffentlichungstag der Anmeldung: **15.03.2023**
(21) Anmeldenummer: 22185455.7
(22) Anmeldetag: 18.07.2022
(51) Int. Cl.: H02J 3/14, H02J 13/00

(54) **TECHNIK ZUM STEUERN EINER VIELZAHL VON LASTEN EINES HAUSES IN EINEM ELEKTRISCHEN VERSORGUNGSNETZ**

(30) Priorität: 14.09.2021 DE 102021123671
(71) Anmelder: E.On Group Innovation GmbH, 45131 Essen (DE)
(72) Erfinder: Hernandez, Luis, 40237 Düsseldorf (DE); Berazaluce, Inigo, 45470 Mühlheim an der Ruhr (DE); Rumney, Denver, Galashiels, TD1 2BL (GB); Rosvall, Jörgen, 23535 Vellinge (SE); Davies, Robert, Putney London, SW15 1AH (GB)
(74) Vertreter: Gunzelmann, Rainer

(57) **Zusammenfassung**

Es wird ein Verfahren zum Steuern einer Vielzahl von Lasten (10, 11, 12, 13) eines Hauses (20, 21) in einem elektrischen Versorgungsnetz (30), welches mit einer Zentraleinheit (40) verbunden ist, beschrieben. Das Verfahren umfasst die Schritte Bestimmen einer Lastspitze in dem elektrischen Versorgungsnetz (30) und in Reaktion auf die Bestimmung der Lastspitze selektives Abschalten einer Last der Vielzahl von Lasten (10, 11, 12, 13). Es werden ferner eine Zentraleinheit (40), eine Steuerung (25) in einem Haus und ein elektrisches Versorgungsnetz (30) beschrieben.

## Beschreibung

### TECHNISCHES GEBIET

Die vorliegende Offenbarung betrifft Techniken zum Steuern einer Vielzahl von Lasten eines Hauses. Insbesondere betrifft die vorliegenden Offenbarung Verfahren zum selektiven Steuern einer Vielzahl von Lasten eines Hauses in einem elektrischen Versorgungsnetz, welches mit einer Zentraleinheit verbunden ist. Des Weiteren betrifft die vorliegende Offenbarung eine Zentraleinheit, ein elektrisches Versorgungsnetz und eine Steuerung in einem Haus, die dazu eingerichtet ist, Instruktionen von einer Zentraleinheit zu empfangen.

### HINTERGRUND

Elektrische Versorgungsnetze verfügen über begrenzte freie Kapazitäten. Ein weiterer Kapazitätsbedarf in den elektrischen Versorgungsnetzen wird durch den Ausbau regenerativer Energiequellen (beispielsweise von Photovoltaikanlagen, Windkraftanlagen, etc.), der Elektrifizierung der Wärmeerzeugung (beispielsweise mit Hilfe von Wärmepumpen) und den Ausbau der E-Mobilität hervorgerufen. Um teure und mehrere Jahre in Anspruch nehmende Netzausbauten zu vermeiden, setzen Energienetzbetreiber immer häufiger intelligente Netzmanagementsysteme ein, welche an das elektrische Versorgungsnetz angeschlossene Lasten, Energieerzeuger und/oder Energiespeicher hinsichtlich der Energieaufnahme aus und der Energieabgabe in das elektrische Versorgungsnetz steuern.

In elektrischen Versorgungsnetzen muss sichergestellt werden, dass es zu keiner Überlastung kommt und die Netzstabilität gewährleistet wird. Um insbesondere Beschädigungen von Transformatoren durch thermische Überlastung zu vermeiden, kommen Maßnahmen zum Vermeiden von Überlasten zum Einsatz.

Bisher bekannte Schutzmaßnahmen sind aber in vielen elektrischen Versorgungsnetzen nicht ausreichend, wenn in den elektrischen Versorgungsnetzen alle zukünftig angeschlossenen elektrischen Verbraucher gleichzeitig elektrische Leistung aus dem elektrischen Versorgungsnetzen beziehen wollen, beispielsweise wenn an einem kalten Tage alle an ein elektrisches Versorgungsnetz angeschlossenen Wärmepumpen mit elektrischen Zusatzheizungen in Betrieb gehen und zusätzlich alle an das elektrische Versorgungsnetz angeschlossenen Ladestationen für elektrische Fahrzeuge geladen werden sollen.

Die US 9,002,524 B2 betrifft ein Steuerungssystem für elektrische Lasten eines Hauses, welches einem Kunden an heißen Sommertagen ermöglicht, einen maximalen Temperaturanstieg in dem Haus im Rahmen eines direkten Laststeuerungsprogramms zu steuern. Dazu umfasst das Haus eine Laststeuerlogik, die als Reaktion auf die Feststellung, dass ein Temperaturschwellenwert erreicht ist, eine direkte Laststeuerung einer raumklimatisierenden Last durch den Versorgungsanbieter deaktiviert und die Steuerung selbst übernimmt. In einer Ausführungsform ist die raumklimatisierende Last eine Wärmepumpe, die bei Erreichen des Temperaturschwellenwerts durch die Laststeuerlogik eingeschaltet wird.

### KURZER ABRISS

Der vorliegenden Offenbarung liegt die Aufgabe zugrunde, eine Technik zum selektiven Steuern einer Vielzahl von Lasten eines Hauses in einem elektrischen Versorgungsnetz bereitzustellen, mit der insbesondere bei hohem Strombedarf des Hauses und/oder des Netzes das elektrische Versorgungsnetz vor einer Überlastung geschützt wird.

Zur Lösung dieser Aufgabe wird ein Verfahren zum Steuern einer Vielzahl von Lasten eines Hauses in einem elektrischen Versorgungsnetz, welches mit einer Zentraleinheit verbunden ist, vorgeschlagen, wobei das Verfahren die Verfahrensschritte Bestimmen einer Lastspitze in dem elektrischen Versorgungsnetz und in Reaktion auf die Bestimmung der Lastspitze selektives Abschalten einer Last der Vielzahl von Lasten umfasst.

Bei dem elektrischen Versorgungsnetz kann es sich um ein Niederspannungsnetz handeln, insbesondere ein Niederspannungsnetz, welches von einem Mittelspannungsnetz gespeist wird. Das elektrische Versorgungsnetz kann ferner als ein intelligentes Stromnetz, ein sogenanntes "Smart Grid", ausgebildet sein. Bei den Lasten handelt es sich um elektrische Lasten, wie beispielsweise elektrische Verbraucher und/oder Energiespeicher. Insbesondere handelt es sich bei den Lasten um Wärmepumpen, Ladestationen für Elektrofahrzeuge und Energiespeicher, wie Batterien. Ferner kann es sich bei den Lasten um elektrische Komponenten handeln, die Energie in das elektrische Versorgungsnetz einspeisen und aus diesem beziehen.

Bei der Zentraleinheit kann es sich um eine Transformatorstation oder eine Transformatorunterstation handeln, in der elektrische Energie von Verteilernetzen im Mittelspannungsbereich (z.B. 3 bis 30 kV in Deutschland) auf die in Haushalten übliche Niederspannung (z.B. 230 V bzw. 400 V in Deutschland) transformiert wird. Die Transformatorstation kann eine Primärtechnik mit einem Leistungstransformator, einer Mittelspannungsschaltanlage und einer Niederspannungsverteilung, eine Sekundärtechnik mit Automatisierungs- und Fernwirktechnik, Energiezähler und eine Kommunikationsvorrichtung umfassen. Die Zentraleinheit kann ferner eine Steuerungsvorrichtung umfassen, die das erfindungsgemäße Verfahren ausführt.

Bei dem Haus kann es sich um jede Art von Gebäude, wie beispielsweise ein Ein- oder Mehrfamilienhaus handeln, dessen elektrisches Hausnetz mit dem elektrischen Versorgungsnetz verbunden ist. Die Vielzahl von Lasten ist an das elektrische Hausnetz angeschlossen.

Wird eine Lastspitze in dem elektrischen Versorgungsnetz, d.h., ein möglicher Versorgungsengpass in dem elektrischen Versorgungsnetz, festgestellt, so wird zunächst nur eine Last der Vielzahl von Lasten in dem Haus abgeschaltet. Dadurch kann verhindert werden, dass der Wohnkomfort in dem Haus stark beeinträchtigt wird.

Ferner kann das Verfahren die Schritte erstes Bestimmen eines Leistungsaufnahmewertes des elektrischen Versorgungsnetzes und/oder des Hauses, erstes Vergleichen des bestimmten Leistungsaufnahmewertes mit einem vorgegebenen Leistungswert, und in Abhängigkeit von dem Ergebnis des ersten Vergleichs selektives Abschalten einer Last der Vielzahl von Lasten umfassen.

Bei dem Leistungsaufnahmewert kann es sich um einen aktuell gemessenen Wert einer Leistungsaufnahme in der Einheit Watt handeln, welche das elektrische Versorgungsnetz den Verbrauchern des elektrischen Versorgungsnetzes bereitstellt bzw. welche von dem Mittelspannungsnetz in das elektrische Versorgungsnetz eingespeist wird. Entsprechend kann dieser Wert bei der Zentraleinheit durch eine Messeinheit gemessen werden. Bei dem Leistungsaufnahmewert kann es sich auch um einen aktuell gemessen Wert einer Leistungsaufnahme eines Hauses oder mehrerer Häuser handeln. Entsprechend kann dieser Wert am Übergabepunkt vom elektrischen Versorgungsnetz zum elektrischen Hausnetz des Hauses gemessen werden. Die Messung kann insbesondere durch den Stromzähler des Hauses erfolgen. Der vorgegebene Leistungswert, mit dem der bestimmte Leistungsaufnahmewert verglichen wird, ist vorzugsweise ein maximaler Leistungsaufnahmewert, beispielsweise ein Maximalwert einer von dem elektrischen Versorgungsnetz unterstützen elektrischen Leistung. Zum Vergleich kann dieser Maximalwert auch um einen Sicherheitswert reduziert sein. Bei dem vorgegebenen Leistungswert kann es sich auch um einen maximal von einem Haus beziehbaren Leistungswert oder einen maximal von allen an ein elektrisches Versorgungsnetz angeschlossenen Häusern beziehbaren Leistungswert handeln.

Ziel des Vergleiches ist es zu bestimmen, ob für das elektrische Versorgungsnetz eine Gefahr einer Überlastung besteht. Wird eine solche Gefahr erkannt, so wird erfindungsgemäß eine Gegenmaßnahme eingeleitet. Insbesondere wird erfindungsgemäß eine intelligente Gegenmaßnahme eingeleitet, die auf die Bewohner der Häuser nur geringe oder gar keine spürbaren Auswirkungen hat. So kann durch das selektive Abschalten einer Last der Vielzahl von Lasten in Abhängigkeit von dem Ergebnis des ersten Vergleichs sichergestellt werden, dass bei einem Versorgungsengpass nicht alle elektrischen Lasten des Hauses von dem Versorgungsengpass bzw. einer Abschaltung betroffen sind, sondern zuerst eine Last abgeschaltet wird, welche für die Bewohner des Hauses nur eine geringe Auswirkung hat.

Bei der Vielzahl von Lasten handelt es sich vorzugweise um eine Wärmepumpe (beispielsweise eine Luftwärmepumpe) und eine Ladestation für ein Elektrofahrzeug. Umfasst ein Haus eine Wärmepumpe und eine Ladestation für ein Elektrofahrzeug, so wird an einem kalten Wintertag bei einem Versorgungsengpass im elektrischen Versorgungsnetz zunächst nur die Ladestation für das Elektrofahrzeug abgeschaltet, sodass sich die Temperatur im Haus nicht verringert. Nach Ende des Versorgungsengpasses kann die Ladestation für das Elektrofahrzeug wieder angeschaltet werden.

Ferner kann die Vielzahl von Lasten einen Kompressor einer Wärmepumpe, und eine elektrische Zusatzheizung und/oder eine Zusatzwarmwasseraufbereitung umfassen. Diese Komponenten können auch als Wärmepumpensystem bezeichnet werden. Kommt es zu einem Versorgungsengpass im elektrischen Versorgungsnetz, so kann zunächst eine der weniger relevanten Komponenten, wie die elektrische Zusatzheizung oder die Zusatzwarmwasseraufbereitung, abgeschaltet werden. Insbesondere kann vorgesehen sein, dass der Kompressor der Wärmepumpe als letzte elektrische Last der Vielzahl von Lasten abgeschaltet wird.

Gemäß einer Weiterbildung der vorliegenden Offenbarung umfasst das Verfahren die Schritte zweites Bestimmen eines Leistungsaufnahmewertes des elektrischen Versorgungsnetzes und/oder des Hauses, zweites Vergleichen des bestimmten Leistungsaufnahmewertes mit einem vorgegebenen Leistungswert, und in Abhängigkeit von dem Ergebnis des zweiten Vergleichs selektives Abschalten einer weiteren Last der Vielzahl von Lasten. Umfasst die Vielzahl von Lasten beispielweise einen Kompressor einer Wärmepumpe, eine elektrische Zusatzheizung und eine Zusatzwarmwasseraufbereitung, so wird bei einem Versorgungsengpass im elektrischen Versorgungsnetz zunächst die Zusatzwarmwasseraufbereitung abgeschaltet und falls der Versorgungsengpass im elektrischen Versorgungsnetz auch nach einem vorbestimmten Zeitintervall noch gegeben ist, als nächste Komponente die elektrische Zusatzheizung abgeschaltet. Nach Ende des Versorgungsengpasses werden die Zusatzwarmwasseraufbereitung und die elektrische Zusatzheizung wieder angeschaltet. Das Wiederanschalten kann auch schrittweise erfolgen, d.h. zunächst wird die elektrische Zusatzheizung wieder angeschaltet und erst nach einer gewissen Zeit wird die Zusatzwarmwasseraufbereitung wieder angeschaltet.

Fällt das elektrische Versorgungsnetz temporär aus und wird es nach dem Ausfall wieder in Betrieb genommen, so sollten Lasten in dem Haus bevorzugt werden, die mit dem Komfort, insbesondere Wärme und Kälte, in dem Haus in Zusammenhang stehen. Dazu kann in Reaktion auf eine Wiederaufnahme des elektrischen Versorgungsnetzes nach einem Ausfall des elektrischen Versorgungsnetzes eine Priorisierung des selektiven Abschaltens der Lasten geändert werden. Beispielsweise hat bei einem Normalzustand des elektrischen Versorgungsnetzes das Laden eines Elektrofahrzeuges Vorrang vor der Warmwasserbereitung in dem Haus, und die Warmwasserbereitung Vorrang vor der Heizung bzw. einem zusätzlichen Heizgerät in dem Haus, wohingegen nach einem Ausfall des elektrischen Versorgungsnetzes die Heizung bzw. das zusätzliche Heizgerät Vorrang vor der Warmwasserbereitung hat, und beide Vorrang vor dem Laden des Elektrofahrzeuges haben.

Ferner kann das Verfahren die folgenden Schritte umfassen: weiteres Bestimmen eines Leistungsaufnahmewertes des elektrischen Versorgungsnetzes und/oder des Hauses, weiteres Vergleichen des bestimmten Leistungsaufnahmewertes mit einem vorgegebenen Leistungswert, und in Abhängigkeit von dem Ergebnis des weiteren Vergleichs und einem das Haus betreffenden Parameter selektives Abschalten einer weiteren Last der Vielzahl von Lasten.

Bei dem das Haus betreffenden Parameter kann es sich um einen sogenannten "Komfortparameter", wie einen Wärmedurchgangskoeffizienten des Hauses (d.h., wie gut ist das Haus isoliert), einen Wärmeträgheitswert des Hauses (d.h., wie schnell kühlt das Haus aus), eine Lage des Hauses (beispielsweise Südlage mit Sonneneinstrahlung oder verschattete Nordlage), einen aktuellen Wert einer Wärmespeicherung in dem Haus (beispielsweise ein voller oder leerer Warmwasserspeicher), eine Umgebungstemperatur des Hauses oder einen Temperaturwert, welcher bei der Wärmespeicherung in dem Haus ermittelt wird, handeln. Der Parameter kann insbesondere statische Parameter oder dynamische Parameter umfassen. Ferner kann eine Kombination von Parametern vorgesehen sein. Der Temperaturwert, welcher bei der Wärmespeicherung in dem Haus ermittelt wird, kann beispielsweise die Temperatur des Wassers eines Warmwasserspeichers sein, wenn zur Wärmespeicherung ein Warmwasserspeicher verwendet wird.

So können elektrische Lasten gemäß einer Priorisierung der elektrischen Lasten für ein Abschalten ausgewählt werden. Ferner können in Abhängigkeit von den Komfortparametern Häuser ausgewählt werden, die für ein Abschalten von elektrischen Lasen in Frage kommen. Insbesondere kann in einem ersten Schritt basierend auf den Komfortparametern ein Haus ausgewählt werden und in einem zweiten Schritt in dem ausgewählten Haus basierend auf einer vorgegebenen Priorisierung der elektrischen Lasten eine der elektrischen Lasten ausgewählt und abgeschaltet werden.

Umfasst das Haus als elektrische Lasten beispielsweise einen Kompressor einer Wärmepumpe, eine elektrische Zusatzheizung, eine Zusatzwarmwasseraufbereitung und eine Ladestation für ein Elektrofahrzeug, so kann bei einem Versorgungsengpass im elektrischen Versorgungsnetz zunächst die Ladestation abgeschaltet werden. Ergibt die weitere Bestimmung und der weitere Vergleich, dass der Versorgungsengpass im elektrischen Versorgungsnetz anhält, so kann, falls es sich bei dem Haus um ein gut isoliertes Haus handelt, als Nächstes die elektrische Zusatzheizung abgeschaltet werden. Befindet sich das Haus in Südlage und wird es gerade von der Sonne beschienen, so kann bei einem weiteren Anhalten des Versorgungsengpasses im elektrischen Versorgungsnetz als Nächstes die Zusatzwarmwasseraufbereitung abgeschaltet werden. Als letzte Last kann der Kompressor der Wärmepumpe abgeschaltet werden, so dass nur bei extremer Kälte der Komfort in dem Haus in Mitleidenschaft gezogen wird. Entsprechend kann in Abhängigkeit von einem Komfortparameter auch ein bestimmtes Haus für eine Abschaltung von elektrischen Lasten außer Acht gelassen werden, beispielsweise, weil es sich um ein altes, schlecht isoliertes Haus handelt.

Um mehrere Häuser in dem elektrischen Versorgungsnetz bei der Reaktion auf einen Versorgungsengpass im elektrischen Versorgungsnetz zu berücksichtigen, kann das Verfahren ferner die folgenden Schritte umfassen: Bestimmen von Leistungsaufnahmewerten einer Vielzahl von Häusern in dem elektrischen Versorgungsnetz, Vergleichen der bestimmten Leistungsaufnahmewerte mit einem vorgegebenen Leistungswert, und in Abhängigkeit von den Vergleichsergebnissen selektives Abschalten von Lasten in der Vielzahl von Häusern. Das Bestimmen von Leistungsaufnahmewerten einer Vielzahl von Häusern kann beispielsweise an einem Netzverteilpunkt einer Niederspannungsebene durchgeführt werden. Der Netzverteilpunkt kann insbesondere ein Umspannwerk oder/und eine Vielzahl von elektrischen Anschlusspunkten umfassen. Das Bestimmen der Leistungsaufnahmewerte einer Vielzahl von Häusern kann beispielsweise dadurch durchgeführt werden, dass eine Stromstärke und/oder eine elektrische Spannung an einem Netzverteilpunkt ermittelt wird. Insbesondere kann das Vorhandensein einer relativ niedrigen elektrischen Spannung ein Indiz dafür sein, dass die Leistungsaufnahmewerte (einer Vielzahl von Häusern) erhöht sind.

So kann bei einem Versorgungsengpass im elektrischen Versorgungsnetz bestimmt werden, welche elektrischen Lasten in einem jeweiligen Haus sukzessive abgeschaltet werden und welche Häuser von einer Abschaltung betroffen sind. Beispielsweise können in einem ersten Schritt bei einer notwendigen Abschaltung einer komfortkritischen Last, wie einer Wärmepumpe, zunächst die einzelnen Komponenten der Wärmepumpe berücksichtigt werden. In diesem Fall wird der Kompressor der Wärmepumpe als wichtigstes Bestandteil als letzte Komponente abgeschaltet. Ferner können die Komfortparameter des Hauses berücksichtigt werden, d.h. beispielsweise Häuser zum Abschalten elektrischer Lasten ausgewählt werden, deren Wärmeträgheit hoch ist bzw. die nur langsam auskühlen. Es ist auch dankbar, dass zunächst Häuser ausgewählt werden, die zum Abschalten von elektrischen Lasten vorgesehen sind, und danach erst jeweilige elektrische Lasten in den ausgewählten Häusern ausgewählt werden. Diese Auswahl kann insbesondere in der Zentraleinheit erfolgen.

Ferner kann das selektive Abschalten von elektrischen Lasten in der Vielzahl von Häusern den folgenden Schritt umfassen: Auswählen eines Hauses der Vielzahl von Häusern, dessen elektrische Lasten selektiv abgeschaltet werden, wobei das Haus in Abhängigkeit von Wärmedurchgangskoeffizienten der Vielzahl von Häusern, Wärmeträgheitswerten der Vielzahl von Häusern, Lagen der Vielzahl von Häusern und/oder aktuellen Werten der Wärmespeicherung der Vielzahl von Häusern ausgewählt wird.

In einer Ausführungsform schaltet die Zentraleinheit die Last über eine direkte Steuerung ab. Diese Ausführungsform kann umfassen, dass die Zentraleinheit die Last in dem Haus direkt steuert oder dass die Zentraleinheit eine Steuerung in dem Haus instruiert, eine bestimmte Last in dem Haus abzuschalten. Bei dieser Ausführungsform liegt die Auswahlintelligenz bei der Zentraleinheit. Insbesondere handelt es sich bei dieser Steuerung um eine Spitzenlaststeuerung.

Alternativ kann die die Zentraleinheit eine Steuerung in dem Haus instruieren, eine der Vielzahl von Lasten abzuschalten, wobei die Steuerung selbst einer der Vielzahl von Lasten auswählt und die ausgewählte Last abschaltet. Bei dieser Ausführungsform liegt die Auswahlintelligenz bei der Steuerung.

Die vorliegende Offenbarung betrifft ferner eine Zentraleinheit in einem elektrischen Versorgungsnetz mit einer Vielzahl von Häusern, wobei die Zentraleinheit dazu eingerichtet ist, eines der vorstehend beschriebenen Verfahren auszuführen.

Die vorliegende Offenbarung betrifft des Weiteren ein elektrisches Versorgungsnetz mit einer vorstehend beschriebenen Zentraleinheit

Schließlich betrifft die vorliegende Offenbarung eine Steuerung in einem Haus, die dazu eingerichtet ist, Instruktionen von einer Zentraleinheit zu empfangen und Lasten in dem Haus selektiv abzuschalten, wobei die Zentraleinheit dazu eingerichtet ist, die Steuerung zu instruieren, eine der Vielzahl von Lasten abzuschalten, und die Steuerung einer der Vielzahl von Lasten auswählt und die ausgewählte Last abschaltet. Die Auswahl einer der Vielzahl von Lasten kann insbesondere nach einem oder mehreren der vorstehend beschriebenen Auswahlverfahren erfolgen.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren Vorrichtungen und Systeme ergeben sich aus der nachfolgenden Beschreibung von Ausführungsbeispielen und der Figuren.
- Fig. 1: zeigt eine schematische Darstellung eines Ausführungsbeispiels eines elektrischen Versorgungsnetzes mit einer Zentraleinheit und einer Vielzahl von Häusern;
- Fig. 2: zeigt ein Flussdiagramm eines Ausführungsbeispiels eines ersten Verfahrens zum Steuern einer Vielzahl von Lasten eines Hauses in einem elektrischen Versorgungsnetz, welches mit einer Zentraleinheit verbunden ist;
- Fig. 3: zeigt ein Flussdiagramm eines Ausführungsbeispiels eines zweiten Verfahrens zum Steuern einer Vielzahl von Lasten eines Hauses in einem elektrischen Versorgungsnetz, welches mit einer Zentraleinheit verbunden ist;
- Fig. 4: zeigt ein Flussdiagramm eines Ausführungsbeispiels eines dritten Verfahrens zum Steuern einer Vielzahl von Lasten eines Hauses in einem elektrischen Versorgungsnetz, welches mit einer Zentraleinheit verbunden ist; und
- Fig. 5: zeigt ein Flussdiagramm eines Ausführungsbeispiels eines vierten Verfahrens zum Steuern einer Vielzahl von Lasten eines Hauses in einem elektrischen Versorgungsnetz, welches durch eine Steuerung in einer Zentraleinheit ausgeführt wird.

### DETAILLIERTE BESCHREIBUNG

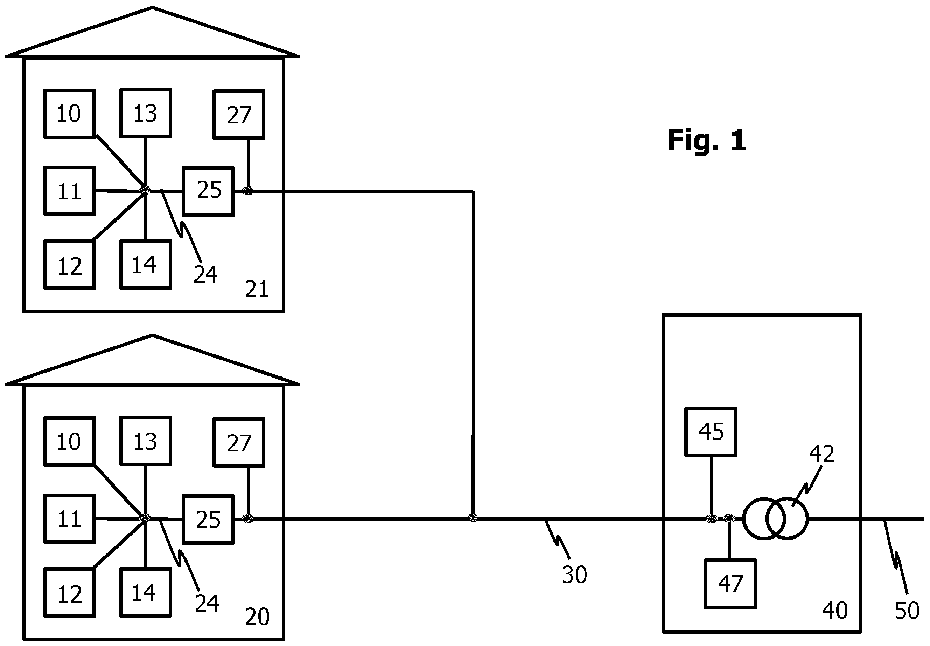

Die Fig. 1 zeigt eine schematische Darstellung eines Ausführungsbeispiels eines elektrisches Versorgungsnetzes 30 mit einer Zentraleinheit 40 und einer Vielzahl von Häusern, von denen zwei Häuser 20 und 21 exemplarisch gezeigt sind.

Bei dem elektrische Versorgungsnetz 30 handelt es sich um ein Niederspannungsnetz, das von einem Mittelspannetz 50 gespeist wird. Zur Transformation zwischen den Netzen 50 und 30 ist in der Zentraleinheit ein Transformator 42 vorgesehen. Durch den Transformator 42 wird die Mittelspannung des Mittelspannungsnetzes 50 in eine Niederspannung transformiert, die von einem Verteiler in eine Vielzahl von Verteilungssträngen des elektrischen Versorgungsnetzes 30 verteilt wird (in Fig. 1 nicht gezeigt). Beispielsweise können an den Verteiler über 100 Verteilungsstränge angeschlossen sein.

Die Zentraleinheit 40 umfasst ferner eine Steuerungsvorrichtung 45 und eine Leistungsmessvorrichtung 47. Mit Hilfe der Steuerungsvorrichtung 45 kann die Zentraleinheit 40 elektrische Lasten in den Häusern 20 und 21 ab- bzw. anschalten. Bei der Steuerungsvorrichtung 45 kann es sich insbesondere um eine G100-kompatible Unterstationssteuerung handeln, siehe Energy Networks Association, Engineering Recommendation G100, Issue 1 Amendment 2 2018, Technical Requirements for Customer Export Limiting Schemes.

Mit Hilfe der Leistungsmessvorrichtung 47 kann bestimmt werden, welcher Leistungswert aktuell von dem elektrischen Versorgungsnetz 30 benötigt wird, d.h., welcher Leistungswert aktuell von dem Mittelspannungsnetz 50 in das elektrischen Versorgungsnetz 30 eingespeist wird.

Jedes der Häuser 20 und 21 umfasst eine Steuerung 25, die mit der Steuerungsvorrichtung 45 der Zentraleinheit 40 über eine Kommunikationsverbindung verbunden ist. Bei der Steuerung 25 kann es sich insbesondere um eine G100-kompatible Steuerung für ein Haus handeln. Bei der Kommunikationsverbindung zwischen der Steuerungsvorrichtung 45 und den Steuerungen 25 handelt es sich um eine Powerline Communication-, PLC, Kommunikationsverbindung. Vorzugsweise handelt es sich um eine Narrowband-(NB) PLC-Kommunikationsverbindung. So erfolgt die Kommunikation zwischen der Steuerungsvorrichtung 45 der Zentraleinheit 40 und den Häusern 20 und 21 über einen Verteilungsstrang des elektrischen Versorgungsnetzes 30. Dazu sind in der Zentraleinheit 40 und den Häusern 20 und 21 PLC-Modems und Koppelkapazitäten vorgesehen (in Fig. 1 nicht gezeigt).

Neben der Steuerung 25 umfasst jedes der Häuser 20 und 21 einen Stromzähler 27 (beispielsweise ein sogenanntes "Smart Meter") und eine Vielzahl elektrischer Lasten 10, 11, 12 und 13, die über ein Hausnetz 24 miteinander verbunden sind. Beispielhaft sind in der Fig. 1 ein Kompressor einer Wärmepumpe 10, eine elektrische Zusatzheizung 11 für kalte Tage und eine Zusatzwarmwasseraufbereitung 12 zum Schutz vor Legionellen und eine Ladestation für ein Elektrofahrzeug 13 gezeigt. Ferner ist ein Wassertank-Energiespeicher 14 vorgesehen. Es versteht sich, dass in jedem der Häuser 20 und 21 auch andere elektrische Lasten, wie Batterien, und zusätzliche Energieerzeuger, wie Photovoltaikanlagen, vorgesehen sein können.

Die Steuerungsvorrichtung 45 der Zentraleinheit 40 kann jede der Steuerungen 25 in den Häusern 20 und 21 über die PLC-Kommunikationsverbindung instruieren, eine der jeweiligen elektrischen Lasten 10, 11, 12 und 13 abzuschalten bzw. wieder einzuschalten. So kann die Steuerungsvorrichtung 45 in Reaktion auf eine Lastspitze in dem elektrischen Versorgungsnetz 30 eine der elektrischen Lasten 10, 11, 12 und 13 selektiv abschalten.

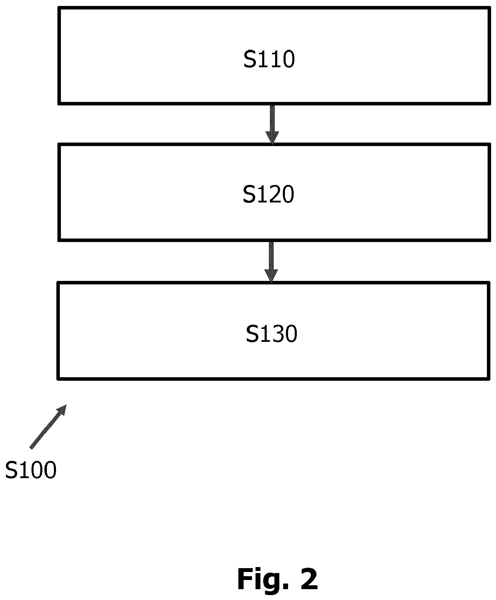

Die Fig. 2 zeigt ein Flussdiagramm eines Ausführungsbeispiels eines ersten Verfahrens S100 zum Steuern einer Vielzahl von Lasten eines Hauses in einem elektrischen Versorgungsnetz. Das Verfahren kann von der in der Fig. 1 gezeigten Zentraleinheit 40 ausgeführt werden und wird nachfolgend unter Bezugnahme auf die Fig. 1 beschrieben. Es sei aber darauf hingewiesen, dass das Verfahren der Fig. 2 nicht auf das Ausführungsbeispiel der Fig. 1 beschränkt ist.

In einem ersten Verfahrensschritt S110 erfolgt ein erstes Bestimmen S110 eines Leistungsaufnahmewertes des elektrischen Versorgungsnetzes 30. Dazu kann die Leistungsmessvorrichtung 47 der Zentraleinheit 40 messen, welcher Leistungswert aktuell von dem Mittelspannungsnetz 50 über den Transformator 42 in das elektrische Versorgungsnetz 30 eingespeist wird.

Danach erfolgt ein erstes Vergleichen S120 des bestimmten Leistungsaufnahmewertes mit einem vorgegebenen Leistungswert. Beispielsweise wird dazu der von der Leistungsmessvorrichtung 47 gemessene Leistungswert mit einem maximalen Leistungswert, für den das elektrische Versorgungsnetz 30 ausgelegt ist, verglichen.

Schließlich erfolgt, in Abhängigkeit von dem Ergebnis des ersten Vergleichs, ein selektives Abschalten S130 einer Last der Vielzahl von Lasten 10, 11, 12 und 13. Ergibt beispielsweise der erste Vergleich, dass der gemessene Leistungsaufnahmewert den maximalen Leistungswert erreicht oder überschreitet und eine Gefahr einer Überlastung des elektrischen Versorgungsnetzes 30 besteht, so wird eine der Lasten 10, 11, 12 oder 13 abgeschaltet. Beispielsweise instruiert die Steuerungsvorrichtung 45 die Steuerung 25 in dem Haus 20, zunächst nur die Ladestation für ein Elektrofahrzeug 13 in dem Haus 20 abzuschalten.

Ergibt ein weiterer Vergleich zwischen gemessenem Leistungsaufnahmewert und maximalem Leistungswert, dass der maximale Leistungswert nicht mehr erreicht wird, d.h. die Gefahr einer Überlastung des elektrischen Versorgungsnetzes 30 nicht mehr besteht, so kann die Steuerungsvorrichtung 45 die Steuerung 25 in dem Haus 20 instruieren, die Ladestation für ein Elektrofahrzeug 13 in dem Haus 20 wieder anzuschalten.

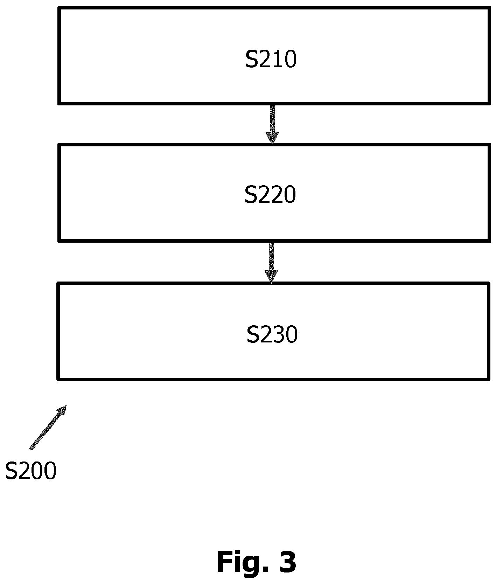

Die Fig. 3 zeigt ein Flussdiagramm eines Ausführungsbeispiels eines zweiten Verfahrens S200 zum Steuern einer Vielzahl von Lasten eines Hauses in einem elektrischen Versorgungsnetz. Das Verfahren kann von der in der Fig. 1 gezeigten Zentraleinheit 40 ausgeführt werden und wird nachfolgend unter Bezugnahme auf die Fig. 1 beschrieben. Es sei aber darauf hingewiesen, dass das Verfahren der Fig. 3 nicht auf das Ausführungsbeispiel der Fig. 1 beschränkt ist. Ferner kann das Verfahren der Fig. 3 direkt im Anschluss an das Verfahren der Fig. 2 ausgeführt werden. Für die folgende Erläuterung des Ausführungsbeispiels der Fig. 3 wird davon ausgegangen, dass nur die Ladestation für ein Elektrofahrzeug 13 in dem Haus 20 abgeschaltet ist.

In einem ersten Verfahrensschritt S210 des Verfahrens der Fig. 3 erfolgt ein zweites Bestimmen eines Leistungsaufnahmewertes des elektrischen Versorgungsnetzes 30. Danach erfolgt ein zweites Vergleichen S210 des bestimmten Leistungsaufnahmewertes mit einem vorgegebenen Leistungswert. Schließlich erfolgt, in Abhängigkeit von dem Ergebnis des zweiten Vergleichs, ein selektives Abschalten S230 einer weiteren Last der verbliebenen Lasten 10, 11 und 12 in dem Haus 20. Ergibt der zweite Vergleich, dass der bestimmte Leistungsaufnahmewert den maximalen Leistungswert erreicht bzw. überschreitet, d.h., die Gefahr einer Überlastung des elektrischen Versorgungsnetzes 30 weiterhin besteht, so wird eine der verbliebenen Lasten 10, 11 und 12 abgeschaltet. Um den Komfort in dem Haus 20 nicht zu beeinträchtigen, wird beispielsweise die Zusatzwarmwasseraufbereitung 12 abgeschaltet. Die Auswahl erfolgt dabei durch die die Steuerungsvorrichtung 45.

Ergibt ein weiterer Vergleich zwischen bestimmtem Leistungsaufnahmewert und maximalem Leistungswert, dass der maximale Leistungswert nicht mehr erreicht wird, so kann die Steuerungsvorrichtung 45 die Steuerung 25 in dem Haus 20 instruieren, die Ladestation für ein Elektrofahrzeug 13 und die Zusatzwarmwasseraufbereitung 12 in dem Haus 20 wieder anzuschalten.

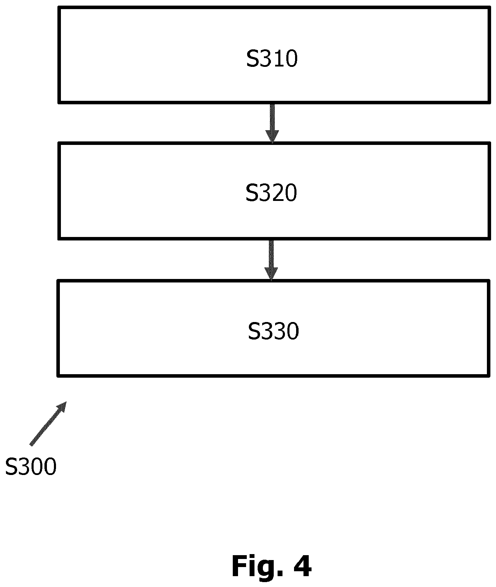

Die Fig. 4 zeigt ein Flussdiagramm eines Ausführungsbeispiels eines dritten Verfahrens S300 zum Steuern einer Vielzahl von Lasten eines Hauses in einem elektrischen Versorgungsnetz, welches mit einer Zentraleinheit verbunden ist. Das Verfahren kann von der in der Fig. 1 gezeigten Zentraleinheit 40 ausgeführt werden und wird nachfolgend unter Bezugnahme auf die Fig. 1 beschrieben. Es sei aber darauf hingewiesen, dass das Verfahren der Fig. 4 nicht auf das Ausführungsbeispiel der Fig. 1 beschränkt ist. Ferner kann das Verfahren der Fig. 3 direkt im Anschluss an das Verfahren der Fig. 2 oder direkt im Anschluss an das Verfahren der Fig. 3 ausgeführt werden. Im Folgenden wird davon ausgegangen, dass das Verfahren direkt im Anschluss an das Verfahren der Fig. 3 ausgeführt wird und nur die Ladestation für ein Elektrofahrzeug 13 und die Zusatzwarmwasseraufbereitung 12 in dem Haus 20 abgeschaltet sind.

In einem ersten Verfahrensschritt S310 erfolgt ein weiteres Bestimmen eines Leistungsaufnahmewertes des elektrischen Versorgungsnetzes 30. Danach erfolgt ein weiteres Vergleichen S320 des bestimmten Leistungsaufnahmewertes mit einem vorgegebenen Leistungswert. Schließlich erfolgt, in Abhängigkeit von dem Ergebnis des weiteren Vergleichs und einem das Haus 20 betreffenden Parameter, ein selektives Abschalten S330 einer weiteren der in dem Haus verbliebenen Lasten 10 und 11.

Bei dem das Haus 20 betreffenden Parameter kann es sich um einen Wärmedurchgangskoeffizienten des Hauses, einen Wärmeträgheitswert des Hauses, eine Lage des Hauses oder einen aktuellen Wert einer Wärmespeicherung in dem Haus handeln. Es kann sich auch um Kombinationen dieser Parameter handeln. Ergibt der weitere Vergleich beispielsweise, dass der bestimmte Leistungsaufnahmewert den vorgegebenen Leistungswert erreicht, d.h., die Gefahr einer Überlastung des elektrischen Versorgungsnetzes 30 weiterhin besteht, und ist der Steuerungsvorrichtung 45 bekannt, dass das Haus 20 nur langsam ausgekühlt, d.h., einen hohen Wärmeträgheitswert aufweist, so instruiert die Steuerungsvorrichtung 45 die Steuerung 25 in dem Haus 20 die elektrische Zusatzheizung 11 abzuschalten. Dazu kann der Steuerungsvorrichtung 45 eine Tabelle vorliegen, in der der Wärmeträgheitswert des Hauses 20 vermerkt ist. In der Tabelle können auch die Wärmeträgheitswerte aller an das elektrische Versorgungsnetz 30 angeschlossenen Häuser 20 und 21 angegeben sein. Ferner können auch Wärmedurchgangskoeffizienten, Wärmeträgheitswert und/oder Lagen aller Häuser 20 und 21 in der Tabelle aufgelistet sein. Des Weiteren ist es denkbar, dass die Steuerungsvorrichtung 45 von jedem der Häuser 20 und 21 aktuelle Werte einer Wärmespeicherung in dem jeweiligen Haus empfängt. Beispielsweise kommuniziert die Steuerung 25 in dem Haus 21 der Steuerungsvorrichtung 45 in der Zentraleinheit 40, dass der Wassertank-Energiespeicher 14 in dem Haus 21 voll ist, was für die Steuerungsvorrichtung 45 ein Hinweis ist, dass elektrische Lasten in dem Haus 21 abgeschaltet werden können ohne den Wärmekomfort in dem Haus 21 wesentlich zu beeinflussen.

Gemäß einer Weiterbildung des Ausführungsbeispiels der Fig. 4 kann das Verfahren ferner den Schritt Auswählen eines Hauses der Vielzahl von Häusern 20 und 21, dessen elektrische Lasten 10, 11, 12 oder 13 selektiv abgeschaltet werden können, in Abhängigkeit von Wärmedurchgangskoeffizienten der Vielzahl von Häusern, Wärmeträgheitswerten der Vielzahl von Häusern, Lagen der Vielzahl von Häusern und/oder aktuellen Werten einer Wärmespeicherung der Vielzahl von Häusern umfassen.

Bei den vorstehend beschriebenen Ausführungsbeispielen wurden die elektrische Lasten 10, 11, 12 und 13 in den Häusern 20 und 21 über eine direkte Steuerung durch die Steuerungsvorrichtung 45 der Zentraleinheit 40 abgeschaltet. Es ist aber auch denkbar, dass die Steuerung in den Häusern 20 und 21 erfolgt. Dazu kann die Steuerungsvorrichtung 45 der Zentraleinheit 40 die Steuerung 25 in dem Haus 21 instruieren, eine der Lasten 10, 11, 12 oder 13 in dem Haus 21 abzuschalten. Die Steuerung 25 wählt sodann in Abhängigkeit von den vorstehend beschriebenen Bedingungen eine der Lasten 10, 11, 12 oder 13 aus und schaltet sie ab. Nach Ende des Versorgungsengpasses kann die Steuerung 25 die abgeschaltete Last wieder einschalten und diese Information der Steuerungsvorrichtung 45 mitteilen. Es ist ferner denkbar, dass die Steuerungsvorrichtung 45 in Abhängigkeit von den Komfortparametern aller Häuser 20 und 21 eines oder mehrere der Häuser 20 und 21 auswählt und die Steuerung 25 in dem/den ausgewählten Haus/Häusern abzuschaltende elektrische Lasten bestimmt.

Gemäß einer Weiterbildung der vorstehend beschriebenen Ausführungsbeispiele erkennt die Zentraleinheit 40, dass das elektrische Versorgungsnetz 30 temporär ausgefallen war und nach dem Ausfall wieder in Betrieb genommen wurde und normal arbeitet. In diesem Fall werden Lasten in den Häuser 20 und 21 bevorzugt, die mit dem Komfort, insbesondere Wärme und Kälte, in den Häusern 20 und 21 in Zusammenhang stehen. Dazu wird in Reaktion auf eine Wiederaufnahme des elektrischen Versorgungsnetzes 30 nach einem Ausfall des elektrischen Versorgungsnetzes 30 eine Priorisierung des selektiven Abschaltens der Lasten 10, 11, 12 und 13 geändert. Beispielsweise hat nach der Wiederaufnahme des Betriebs des elektrischen Versorgungsnetzes 30 der Kompressor der Wärmepumpe 10 die höchste Priorität, die elektrische Zusatzheizung 11 für kalte Tage die zweithöchste Priorität, die Zusatzwarmwasseraufbereitung 12 zum Schutz vor Legionellen die dritthöchste Priorität und die Ladestation für ein Elektrofahrzeug 13 die niedrigste Priorität, wohingegen bei Normalbetrieb des elektrischen Versorgungsnetzes 30 die Ladestation für ein Elektrofahrzeug 13 die höchste Priorität hat.

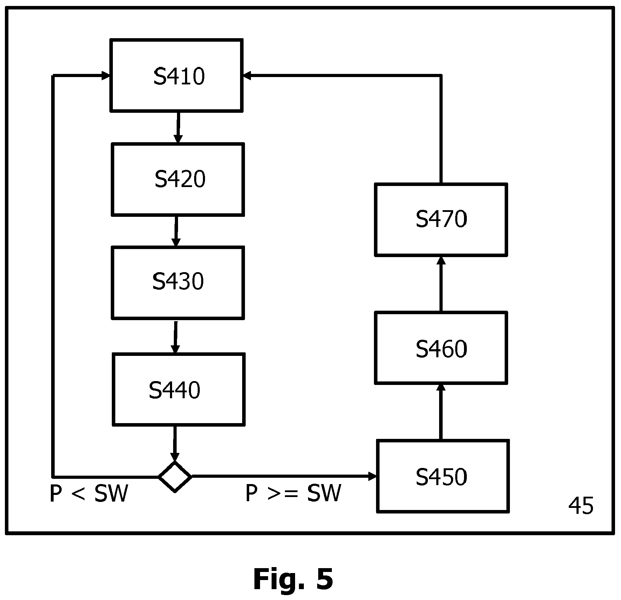

Die Fig. 5 zeigt ein Flussdiagramm eines Ausführungsbeispiels eines vierten Verfahrens zum Steuern einer Vielzahl von Lasten eines Hauses in einem elektrischen Versorgungsnetz, welches durch eine Steuerungsvorrichtung in einer Zentraleinheit ausgeführt wird. Das Verfahren kann von der in der Fig. 1 gezeigten Steuerungsvorrichtung 45 der Zentraleinheit 40 ausgeführt werden und wird nachfolgend unter Bezugnahme auf die Fig. 1 beschrieben. Es sei aber darauf hingewiesen, dass das Verfahren der Fig. 5 nicht auf das Ausführungsbeispiel der Fig. 1 beschränkt ist.

In einem ersten Schritt S410 misst die Steuerungsvorrichtung 45, ob ein Leistungsaufnahme-Grenzwert in dem elektrischen Versorgungsnetz 30 erreicht wird. In einem nächsten Schritt S420 überprüft die Steuerungsvorrichtung 45 die steuerbaren Lasten jeder der Häuser 20 und 21. Insbesondere prüft die Steuerungsvorrichtung 45 welche der elektrischen Lasten aktuell abschaltbar sind. Dies Information kann die Steuerungsvorrichtung 45 in Echtzeit von den Steuerungen 25 in den Häusern 20 und 21 beziehen oder liegt der Steuerungsvorrichtung 45 in Form einer Tabelle vor.

Anschließend bestimmt die Steuerungsvorrichtung 45 in einem Schritt S430 welche steuerbare Last in jedem der Häuser 20 und 21 abgeschaltet werden soll. Dazu werden auch interne Klassifikationen der elektrischen Lasten, beispielsweise, dass ein Kompressor einer Luftwärmepumpe als Letztes abgeschaltet wird, berücksichtigt. Danach wird von der Steuerungsvorrichtung 45 in einem Schritt S440 eine Instruktion an eine ausgewählte, steuerbare Last gesendet, wodurch diese abgeschaltet wird.

Ist danach ein Leistungswert P, d.h., der Wert einer Leistungsaufnahme im elektrischen Versorgungsnetz 30, kleiner als ein Schwellenwert SW, d.h. P < SW, so geht das Verfahren wieder zu Schritt S410. Ist jedoch der Leistungswert P größer oder gleich dem Schwellenwert SW, d.h. P >= SW, so wird das Verfahren mit Schritt S450 fortgeführt, bei dem die Steuerungsvorrichtung 45 den Status der kritischen Lasten in jedem der Häuser 20 und 21 überprüft (bzw. den Status bereits kennt). Der Status der Lasten kann dabei in Form einer Tabelle vorliegen. Anschließend erfolgt in einem Schritt S460 eine Überprüfung durch die Steuerungsvorrichtung 45 von Komfortparametern der Häuser 20 und 21, um zu entscheiden, welche kritischen Lasten der Häuser 20 und 21 abgeschaltet werden sollen. Bei den Komfortparametern kann es sich um statische oder dynamische Parameter handeln. Schließlich wird in dem Verfahrensschritt S470 eine Abschaltinstruktion an die ausgewählte, kritische Last gesendet. Danach geht das Verfahren wiederum zu Schritt S410. Entsprechend kann sich das Verfahren wiederholen.

Gemäß einer weiteren Ausführungsform unter Bezugnahme auf die Ausführungsbeispiele der Figs. 1 bis 5 hat der Eigentümer des Hauses 20 mit dem Versorgungsunternehmen des elektrischen Versorgungsnetzes 30 einen flexiblen Vertrag abgeschlossen, der es dem Versorgungsunternehmen ermöglicht, elektrische Lasten in dem Haus 20 bei Versorgungsengpässen in dem elektrischen Versorgungsnetz 30 abzuschalten. Dafür erhält der Eigentümer des Hauses 20 von dem Versorgungsunternehmen einen günstigeren Strompreis. Entsprechend können die vorstehend beschriebenen Verfahren umfassen, dass nur in solchen Häusern elektrische Lasten abgeschaltet werden, deren Eigentümer mit dem Versorgungsunternehmen einen flexiblen Vertrag abgeschlossen haben.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Verfahren zum Steuern einer Vielzahl von Lasten (10, 11, 12, 13) eines Hauses (20, 21) in einem elektrischen Versorgungsnetz (30), welches mit einer Zentraleinheit (40) verbunden ist, umfassend
Bestimmen einer Lastspitze in dem elektrischen Versorgungsnetz (30); und
in Reaktion auf die Bestimmung der Lastspitze selektives Abschalten einer Last der Vielzahl von Lasten (10, 11, 12, 13).

2. Verfahren nach Anspruch 1, ferner umfassend
erstes Bestimmen (S110) eines Leistungsaufnahmewertes des elektrischen Versorgungsnetzes (30) und/oder des Hauses (20, 21);
erstes Vergleichen (S120) des bestimmten Leistungsaufnahmewertes mit einem vorgegebenen Leistungswert; und
in Abhängigkeit von dem Ergebnis des ersten Vergleichs selektives Abschalten (S130) einer Last der Vielzahl von Lasten (10, 11, 12, 13).

3. Verfahren nach Anspruch 2, ferner umfassend
zweites Bestimmen (S210) eines Leistungsaufnahmewertes des elektrischen Versorgungsnetzes (30) und/oder des Hauses (20, 21);
zweites Vergleichen (S210) des bestimmten Leistungsaufnahmewertes mit einem vorgegebenen Leistungswert; und
in Abhängigkeit von dem Ergebnis des zweiten Vergleichs selektives Abschalten (S230) einer weiteren Last der Vielzahl von Lasten (10, 11, 12, 13).

4. Verfahren nach einem der vorhergehenden Ansprüche, ferner umfassend
in Reaktion auf eine Wiederaufnahme des elektrischen Versorgungsnetzes (30) nach einem Ausfall des elektrischen Versorgungsnetzes (30) Ändern einer Priorisierung des selektiven Abschaltens der Lasten (10, 11, 12, 13).

5. Verfahren nach einem der vorhergehenden Ansprüche, ferner umfassend
weiteres Bestimmen (S310) eines Leistungsaufnahmewertes des elektrischen Versorgungsnetzes (30) und/oder des Hauses (20, 21);
weiteres Vergleichen (S320) des bestimmten Leistungsaufnahmewertes mit einem vorgegebenen Leistungswert; und
in Abhängigkeit von dem Ergebnis des weiteren Vergleichs und einem das Haus (20, 21) betreffenden Parameter selektives Abschalten (S330) einer weiteren Last der Vielzahl von Lasten (10, 11, 12, 13).

6. Verfahren nach Anspruch 5, wobei
der das Haus (20, 21) betreffende Parameter einen Wärmedurchgangskoeffizienten des Hauses (20, 21), einen Wärmeträgheitswert des Hauses (20, 21), eine Lage des Hauses (20, 21), einen aktuellen Wert einer Wärmespeicherung in dem Haus (20, 21), eine Umgebungstemperatur des Hauses (20, 21) und/oder einen Temperaturwert, welcher bei der Wärmespeicherung in dem Haus (20, 21) ermittelt wird, umfasst.

7. Verfahren nach einem der vorhergehenden Ansprüche, wobei
die Vielzahl von Lasten (10, 11, 12, 13) eine Wärmepumpe (10, 11, 12) und eine Ladestation für ein Elektrofahrzeug (13) umfasst.

8. Verfahren nach einem der vorhergehenden Ansprüche, wobei
die Vielzahl von Lasten (10, 11, 12) einen Kompressor einer Wärmepumpe (10), und eine elektrische Zusatzheizung (11) und/oder eine Zusatzwarmwasseraufbereitung (12) umfasst.

9. Verfahren nach Anspruch 8, wobei
der Kompressor der Wärmepumpe (10) als letzte Last der Vielzahl von Lasten (10, 11, 12) abgeschaltet wird.

10. Verfahren nach einem der vorhergehenden Ansprüche, ferner umfassend
Bestimmen von Leistungsaufnahmewerten einer Vielzahl von Häusern (20, 21) in dem elektrischen Versorgungsnetz (30);
Vergleichen der bestimmten Leistungsaufnahmewerte mit einem vorgegebenen Leistungswert; und
in Abhängigkeit von den Vergleichsergebnissen selektives Abschalten von Lasten (10, 11, 12, 13) in der Vielzahl von Häusern (20, 21).

11. Verfahren nach Anspruch 10, wobei
das selektive Abschalten von Lasten (10, 11, 12, 13) in der Vielzahl von Häusern (20, 21) den folgenden Schritt umfasst:
Auswählen eines Hauses der Vielzahl von Häusern (20, 21), dessen elektrische Lasten (10, 11, 12, 13) selektiv abgeschaltet werden, wobei die Auswahl in Abhängigkeit von Wärmedurchgangskoeffizienten der Vielzahl von Häusern (20, 21), Wärmeträgheitswerten der Vielzahl von Häusern (20, 21), Lagen der Vielzahl von Häusern (20, 21) und/oder aktuellen Werten einer Wärmespeicherung der Vielzahl von Häusern (20, 21) erfolgt.

12. Verfahren nach einem der vorhergehenden Ansprüche, wobei
die Zentraleinheit (40) die Last (10, 11, 12, 13) über eine direkte Steuerung abschaltet; oder
die Zentraleinheit (40) eine Steuerung (25) in dem Haus instruiert (20, 21), eine der Vielzahl von Lasten (10, 11, 12, 13) abzuschalten, wobei die Steuerung (25) einer der Vielzahl von Lasten (10, 11, 12, 13) auswählt und die ausgewählte Last abschaltet.

13. Zentraleinheit (40) in einem elektrischen Versorgungsnetz (30) mit einer Vielzahl von Häusern (20, 21), wobei die Zentraleinheit (40) dazu eingerichtet ist, das Verfahren nach einem der vorhergehenden Ansprüche auszuführen.

14. Elektrisches Versorgungsnetz (30) mit einer Zentraleinheit (40) nach Anspruch 13.

15. Steuerung (25) in einem Haus (20, 21), die dazu eingerichtet ist, Instruktionen von einer Zentraleinheit (40) zu empfangen und Lasten (10, 11, 12, 13) in dem Haus (20, 21) selektiv abzuschalten, wobei die Zentraleinheit (40) dazu eingerichtet ist, das Verfahren nach Anspruch 12 auszuführen.
